# EUROPEAN PATENT APPLICATION

(11) **EP 3 193 066 A1**
(43) Date of publication of application: **19.07.2017**
(21) Application number: 16151417.9
(22) Date of filing: 15.01.2016
(51) Int. Cl.: F16K 43/00, F16K 1/52, F24D 19/10

(54) **VALVE, IN PARTICULAR HEAT EXCHANGER VALVE**

(71) Applicant: Danfoss A/S, 6430 Nordborg (DK)
(72) Inventor: Clausen, Anders Østergaard, 8680 Ry (DK)
(74) Representative: Knoblauch, Andreas

(57) **Abstract**

A valve (1), in particular a heat exchanger valve, is described comprising a housing (2) having a first port (3), a second port (4), a flow path between said first port (3) and said second port (4), valve means (7, 9) being located in said flow path and including a valve element (9) and a valve seat (7).

Such a valve should facilitate servicing of a heat exchanger connected to this valve.

To this end in addition to said valve means (7, 9) closing means (17, 18) are provided.

## Description

The present invention relates to a valve, in particular a heat exchanger valve, comprising a housing having a first port, a second port, a flow path between said first port and said second port, valve means being located in said flow path and including a valve element and a valve seat.

Such a valve can be used in connection with a heat exchanger, in particular with a radiator, in order to control a flow of heat carrying fluid or cooling fluid through the heat exchanger.

Some heating or cooling systems require a high flow of the heat carrying fluid which is in most cases connected with the risk that high pressures occur. The present invention relates in particular to a high flow valve.

When the heat exchanger which is connected to the valve, should be serviced, it is necessary that the valve cuts off the flow of fluid. When no heating or cooling is demanded, e.g. in summertime for heating, the valve should interrupt the flow as well. However, such a valve is often actuated by a thermostatic actuator. Even if the thermostatic actuator is in a condition in which the valve element is moved to rest against the valve seat to close the valve, there is a risk that in case of a high pressure the valve element is lifted off the valve seat. Most thermostatic actuators comprise a safety spring allowing the movement of the valve element against the force of the thermostatic actuator in case a high pressure occurs and thus lifting the valve element from the valve seat compressing the safety spring.

This can be a too dangerous situation when a heat exchanger connected to the valve is serviced.

The task underlying the invention is to facilitate servicing of a heat exchanger connected to such a valve.

This object is solved with a heat exchanger as described at the outset in that in addition to said valve means closing means are provided.

The closing or cutting-off function of the valve is now realized not only by the valve means, i.e. by the valve element cooperating with the valve seat. Additionally, the closing means can be used to completely shut the valve and to reliably interrupt any flow through the flow path of the valve.

In a preferred embodiment said closing means surround said valve means. In this case the flow direction through the valve is of less importance. Furthermore, there is not much additional space necessary to accommodate the closing means in said housing.

Preferably said closing means comprise a closing element which is moveable from a closed position into an open position by a rotational movement. When the closing element is in closed position, it cannot be shifted in an open position by a fluid pressure within the housing. The pressure itself cannot cause a rotational movement so that the valve is reliably closed, when the closing element is in closed position.

Preferably said valve element is connected to a valve stem having a stem axis and said closing element is rotatable around said stem axis. The stem axis defines a center of rotation of the closing element.

In a preferred embodiment an insert is arranged within said housing, said insert forming part of said closing means. Said insert is used to form the valve seat so that machining of the housing is not necessary.

Preferably said valve element is guided in said insert. The insert can be used for a second purpose. It guides the valve element. To this end the valve element can be provided with a protrusion being telescoped within a channel in the insert.

Preferably said insert comprises a hollow cylinder having an opening in a circumferential wall and said closing element comprises a cylinder wall having a front face which is inclined with respect to a plane, which plane is perpendicular to an axis of said cylinder wall. The cylinder wall of the closing element has its greatest length and its shortest length displaced by 180°. When the shortest length is in the position of the opening in the circumferential wall of the hollow cylinder the closing means are open. When the greatest length is in the position of the opening, the closing means are closed and interrupt reliably any flow through the valve.

Preferably said cylinder wall is arranged within said hollow cylinder. This embodiment is in particular advantageous in case the flow through the valve has direction in which the fluid passes the valve seat before reaching the valve element. In this case the pressure of the fluid builds up within the closing element so that the closing element is pressed against the hollow cylinder which increases the tightness of the closing means.

Preferably sealing means are provided between said cylinder wall and said hollow cylinder. The sealing means are used to reliably seal the closing element.

In this case it is preferred that said sealing means comprise a sealing ring which is arranged in parallel to said inclined front face. The sealing ring is inclined or slanted as well. Basically it has the form of an ellipse. Due to the slanted arrangement of the sealing ring it can be used to form a barrier between the first port and the second port of the housing.

In a preferred embodiment a valve top is mounted in said housing, said valve top having an opening through which a closing element position indicator is visible. A service person can see from the outside whether the closing means are in closed condition or whether they are in opened condition.

Preferably said closing element comprises a bearing section which is accommodated in said valve top. The bearing section allows a rotational movement of the closing element within the valve top.

Preferably said bearing section comprises an end section protruding out of said valve top, wherein a ring is rotationally fixed to said end section, said ring having a circumferential geometry different from a cylinder. The ring can, for example, have grooves and notches running in parallel to the stem axis. Such a form allows a manual adjustment of the closing element simply by applying a torque to the ring.

Preferably said ring is in snap connection with said valve top. The ring is securely held to the valve top and cannot get lost.

A preferred example of the invention will now be described in more detail with reference to the drawing, wherein:
- Fig. 1: is sectional view of a heat exchanger valve with closing means in open condition,
- Fig. 2: shows the same valve with the closing means in closed condition and
- Fig. 3: shows the closing means in a side view.

The same elements are shown with the same reference numerals in all figures.

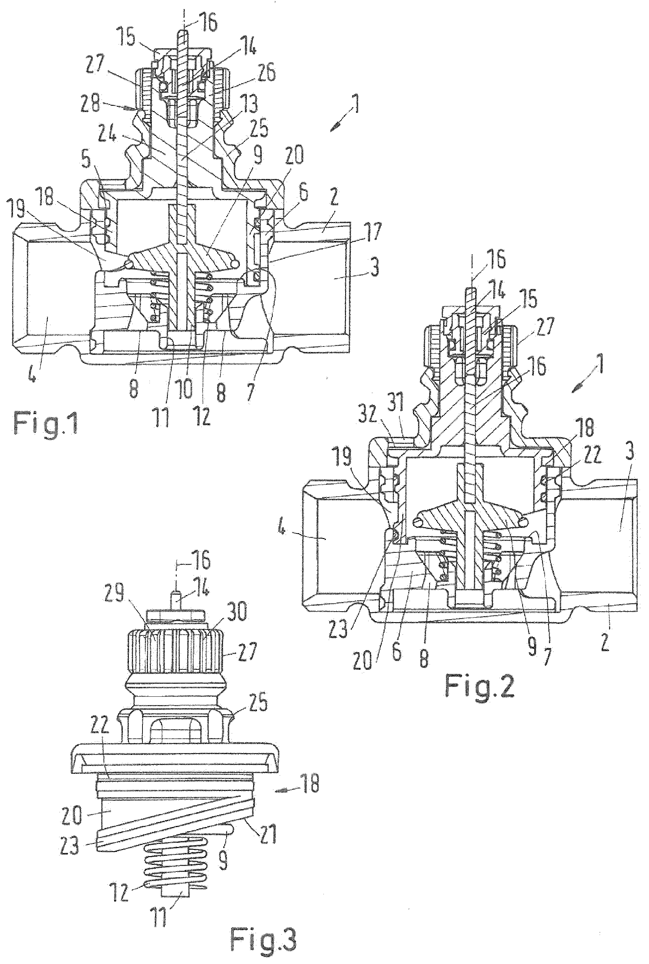

Fig. 1 shows a heat exchanger valve 1 in form of a radiator valve, in particular a high flow valve. The valve has a housing 2 which is provided with a first port 3 and a second port 4. In the present case the first port 3 is used as inlet and the second port 4 is used as outlet.

The housing comprises a bore 5 between said first port 3 and said second port 4. The bore 5 is arranged basically perpendicular to the first port 3 and to the second port 4.

An insert 6 is mounted in said bore 5 and consequently located between said first port 3 and said second port 4.

Insert 6 comprises a valve seat 7. Furthermore, insert 6 comprises some openings 8 forming part of a flow path from the first port 3 to the second port 4.

A valve element 9 cooperates with said valve seat 7. The valve element 9 comprises a protrusion 10 with which it is guided in a guiding channel 11 of the insert 6.

The valve element 9 is loaded by a spring 12. The force of said spring 12 is directed away from the valve seat 7.

The valve element is connected to a stem 13 which in turn can be actuated by a pin 14 which is arranged within a stuffing box 15. As it is known, the valve element 9 can be actuated via stem 13 and pin 14 by a thermostatic actuator which is not shown. Stem 13 and pin 14 have a common axis 16 which is referred to as "stem axis".

Insert 6 comprises a hollow cylinder 17 surrounding valve seat 7 and valve element 9. The hollow cylinder 17 starts in a region near valve seat 7 and extends in a direction towards stuffing box 15. The hollow cylinder 17 ends at the end of bore 5, i.e. it is basically flush with the housing 2. The hollow cylinder 17 forms part of closing means, more precisely is a stationary part of closing means.

Said closing means furthermore have a closing element 18 which is a moveable part of said closing means. Hollow cylinder 17 has an opening 19 in its circumferential wall. Closing element 19 comprises a cylinder wall 20 with a front face 21 which is inclined with respect to a plane, which plane is perpendicular to the axis of said cylinder wall 20 and consequently perpendicular to the stem axis 16.

In other words, cylinder wall 20 has a shortest length parallel to said stem axis 16 on the right hand side (as shown in Fig. 3) and a greatest length parallel to the stem axis 16 on the left hand side as shown in Fig. 3.

Fig. 1 shows a situation in which the opening 19 in the hollow cylinder 17 is not covered by the cylinder wall 20 of the closing element 18 since the closing element 18 has been rotated so that the shortest length of the cylinder wall 20 is in the position of the opening 19.

Fig. 2 shows the other condition in which the opening 19 is covered by the cylinder wall 20 since the greatest length of the cylinder wall 20 is in the angular position of opening 19.

The closing element 18 is arranged within said hollow cylinder 17. Pressure of a fluid arising at the first port 3 will then press the cylinder wall 20 of the closing element 18 against the radial inside of the circumferential wall of hollow cylinder 17. This improves tightness of the valve 1.

The closing element 18 carries a first sealing ring 22 which is arranged in a plane perpendicular to said stem axis 16. Furthermore, the closing element 18 is provided with a second sealing ring 23 which is arranged parallel to the front face 21, i.e. it is slanted to the stem axis 16.

The first sealing ring 22 seals the housing 2 to the outside. In the closed condition shown in Fig. 2 the second sealing ring 23 seals between the first port 3 and the second port 4 irrespective of the position of the valve element 9 relative to the valve seat 7.

The closing element 18 continues in a bearing section 24 which is arranged within a valve top 25. The bearing section continues in an end section 26 protruding out of the valve top 25.

A ring 27 which is in snap connection 28 with the valve top 25 is rotatably fixed to the end section 26 and comprises a circumferential geometry different from a cylinder. In the embodiment shown in Fig. 3 ring 27 comprises grooves 29 and notches 30 so that a torque can be applied to ring 27 by using the fingers of an operator.

Valve top 25 comprises an opening 31 through which an indicator 32 is visible which indicator shows the position of the closing element 18. The indicator 32 can be, for example, a red color for closed position of the closing element 18 and a green color for the open position of the closing element 18. However, other forms of the indicator 32 are possible.

When the valve 1 is to be closed, for example, to perform service at a radiator connected to said valve 1, the ring 27 is rotated. This rotation drives the closing element 18 in a rotating movement via the bearing section 24 and the end section 26. In a way not shown it is possible to use end stops to limit the rotational movement in the two possible directions and to reliably reach the positions of the closing element 18 shown in Fig. 1 or 2, respectively. Any force produced by a pressure within said closing element 18 and within said hollow cylinder 17 will not be able to move the closing element 18 out of the closed position shown in Fig. 2. To the contrary, such a pressure would press the closing element firmly against the radial inside of the hollow cylinder 17 of the insert 6.

The valve housing 2 can be made of metal. The insert 6, the valve top 25 and the closing element 18 including the bearing section 24 can be made of a plastic material. The same is true for valve element 9 which can be made from a plastic material as well.

## Claims

1. Valve, in particular heat exchanger valve (1), comprising a housing (2) having a first port (3), a second port (4), a flow path between said first port (3) and said second port (4), valve means (7, 9) being located in said flow path and including a valve element (9) and a valve seat (7), **characterized in that** in addition to said valve means (7, 9) closing means (17, 18) are provided.

2. Valve according to claim 1, **characterized in that** said closing means (17, 18) surround said valve means (7, 9).

3. Valve according to claim 1 or 2, **characterized in that** said closing means (17, 18) comprise a closing element (18) which is movable from a closed position into an open position by a rotational movement.

4. Valve according to claim 3, **characterized in that** said valve element (9) is connected to a valve stem (13) having a stem axis (16) and said closing element (18) is rotatable around said stem axis (16).

5. Valve according to claim 3 or 4, **characterized in that** an insert (6) is arranged within said housing (2), said insert (6) forming part of said closing means (17, 18).

6. Valve according to claim 5, **characterized in that** said valve element (9) is guided in said insert (6).

7. Valve according to claim 5 or 8, **characterized in that** said insert (6) comprises a hollow cylinder (17) having an opening (19) in a circumferential wall and said closing element (18) comprises a cylinder wall (20) having a front face (21) which is inclined with respect to a plane, which plane is perpendicular to an axis of said cylinder wall (20).

8. Valve according to claim 7, **characterized in that** said cylinder wall (20) is arranged within said hollow cylinder (17).

9. Valve according to claim 7 or 8, **characterized in that** sealing means (23) are provided between said cylinder wall (20) and said hollow cylinder (17).

10. Valve according to claim 9, **characterized in that** said sealing means (23) comprise a sealing ring which is arranged in parallel to said inclined front face (21).

11. Valve according to claim 5 to 10, **characterized in that** a valve top (25) is mounted in said housing (2), said valve top (25) having an opening (31) through which a closing element position indicator (32) or a presetting adjustment is visible.

12. Valve according to claim 11, **characterized in that** said closing element (18) comprises a bearing section (24) which is accommodated in said valve top (25).

13. Valve according to claim 12, **characterized in that** said bearing section (24) comprises an end section (26) protruding out of said valve top (25), wherein a ring (27) is rotationally fixed to said end section (26), said ring (27) having a circumferential geometry different from a cylinder.

14. Valve according to claim 13, **characterized in that** said ring (27) is in snap connection with said valve top (25).

15. Valve according to any of claims 1 to 14,**characterized in that** at least part of said closing means (17, 18) are made of plastic material, in particular of injection molded plastic material.
